# EUROPÄISCHE PATENTSCHRIFT

(11) **EP 2 816 299 B1**
(45) Veröffentlichungstag und Bekanntmachung des Hinweises auf die Patenterteilung: **04.01.2017**
(21) Anmeldenummer: 14169353.1
(22) Anmeldetag: 21.05.2014
(51) Int. Cl.: F24J 2/52, F16B 7/22, F16B 21/09

(54) **Verwendung einer Montageklammer**
Use of a mounting clamp
Utilisation d'une pince de montage

(30) Priorität: 17.06.2013 DE 202013102571 U
(43) Veröffentlichungstag der Anmeldung: 24.12.2014
(73) Patentinhaber: Green One Tec Solar-Industrie GmbH, 9300 St. Veit (AT)
(72) Erfinder: Hochreiter, Erwin, 9020 Klagenfurt (AT); Kohlenbrein, Diether, 9020 Klagenfurt (AT)
(74) Vertreter: Becker, Thomas

(56) Entgegenhaltungen:
- EP-A1- 2 484 844
- EP-A2- 2 187 448
- EP-A2- 2 317 246
- EP-A2- 2 385 325
- EP-A2- 2 479 514
- WO-A1-2011/071489
- DE-A1-102010 006 567
- DE-A1-102011 012 600
- JP-A- H09 235 844
- JP-A- 2010 027 979
- DATABASE EPODOC [Online] EUROPEAN PATENT OFFICE, THE HAGUE, NL; 22. November 2012 (2012-11-22), XP002734878, Database accession no. GR-20110100244-A -& GR 2011 0100 244 A (RAMA ANONYMI VIOMICHANIKI EBORIKI EISAGOGIKI ETAIREIA METALLIKON KATAS) 22. November 2012 (2012-11-22)

## Beschreibung

Die Erfindung betrifft die Verwendung einer Montageklammer zur Sicherung eines Solarkollektors an einer, auf einer Rückseite des Solarkollektors verlaufenden Montageschiene.

Der Begriff "Solarkollektor" umfasst erfindungsgemäß alle Arten solartechnischer Module und insbesondere Solarmodule zur Erzeugung von Warmwasser (so genannte Solarthermie-Kollektoren) als auch Solarmodule zur Erzeugung von Strom (so genannte Photovoltaik-Module).

Üblicherweise besitzen diese Solarmodule eine (angenäherte) Quaderform, wobei typische Abmessungen (L/B/T, mit L = Länge, B = Breite und T = Tiefe) wie folgt sind:
L = 100 bis 300 cm
B = 30 bis 150 cm
T = 2 bis 20 cm.

Diese Module weisen eine der Sonne zugewandte Seite (nachstehend: Vorderseite) und entsprechend eine der Sonne abgewandte Seite (nachstehend: Rückseite) auf.

Die Rückseite und/oder Seiten des Solarkollektors dienen gleichzeitig zur Befestigung (Montage) der Solarkollektoren, beispielsweise auf einer Gebäude-Dachfläche oder an einer Gebäude-Fassade.

Die Solarkollektoren können auf Gerüsten an beliebigen anderen Stellen aufgestellt werden. Nachstehend wird die häufigste Montageart, nämlich auf Gebäudedächern, beschrieben.

Ein Problem bei der Montage ist es, die großen und schweren Solarkollektoren auf korrespondierenden Schienen (Montageschienen) präzise zu positionieren, insbesondere fluchtend zueinander. Dies gilt insbesondere dann, wenn bei Solarkollektoren für solarthermische Zwecke benachbarte Solarkollektoren strömungstechnisch miteinander verbunden werden sollen (so genannte "hydraulische Verbindung"). Dabei müssen benachbarte Kollektoren relativ zueinander in die gewünschte Verbindungsposition verschoben werden. Dies erfolgt vorzugsweise entlang der genannten Schienen. Dies setzt eine entsprechende Verschiebbarkeit ebenso voraus wie eine gleich bleibende Orientierung der Solarkollektoren während des Verschiebens und der anschließenden Montage/Verbindung miteinander.

Die EP 2187448 A2 beschreibt ein 3-teiliges Montageset für einen Solarkollektor. Die EP 2484844 A1 offenbart ein Montagesystem für Fassadenpaneele, bei denen eine Verbindungsklammer auf einer Seite an einer Schiene mit Haken befestigt wird und auf der anderen Seite mit dem Paneel verrastet wird. Die GR 20110100244 A zeigt ein Trägerelement, bei dem eine Verrastung über 2 Haken auf einer Seite des Trägerelementes erfolgt. Eine Ausführung mit einem Rasthaken offenbart die EP 2385325 A2.

In der DE 20 2008 002 346 U1 wird zu diesem Zweck vorgeschlagen, die genannte Schiene mit einer Nut auszubilden und einen Winkel in diese Nut einzuhängen. Der Winkel hat eine Auflagefläche und eine Haltefläche für den Solarmodul. Dabei sollen die Teile verstellbar zueinander sein, um eine Anpassung vor Ort zu ermöglichen.

Die bekannte Vorrichtung erfordert Einstellarbeiten und Justierungen am Montageort. Der mehrteilige Winkel lässt sich dabei nicht immer exakt einstellen.

Um zu verhindern, dass die Solarkollektoren bei der Montage abrutschen, sind aus der Praxis so genannte Fanghaken bekannt, die aus Aluminium oder Stahl bestehen. Diese Fanghaken haben den Nachteil, dass eine große Haftreibung gegenüber dem Solarkollektor und der Schiene besteht, so dass die gewünschte Relativverschiebung schwierig ist. Scharfe Kanten und lange Hebel an den Fanghaken sind weitere Nachteile. Schließlich ist eine Montage von Solarkollektoren an einer (vertikalen) Gebäudefassade mit solchen Fanghakenfast unmöglich, da die Gefahr besteht, dass der ebenfalls vertikal zu montierende Kollektor herabfällt.

Der Erfindung liegt insoweit die Aufgabe zugrunde, eine Möglichkeit aufzuzeigen, die Montage von Solarkollektoren zu vereinfachen, wobei möglichst viele der nachfolgenden Aspekte berücksichtigt werden sollen:
- sichere Montage des Solarkollektors
- Verschiebbarkeit des Solarkollektors während der Montage
- Montage ohne separates Werkzeug
- Montage mehrerer Solarkollektoren, die gleichzeitig strömungstechnisch miteinander verbunden werden
- Genaue Position der Solarkollektoren

Die Erfindung löst sich von dem Gedanken, dass die Schiene, auf der die Solarkollektoren befestigt werden, der beste Ort ist, um Sicherungsmaßnahmen auszuführen, mit denen ein unbeabsichtigtes Lösen des Solar kollektors während der Montage oder eine Beweglichkeit des Solarkollektors während der Montage erreicht werden kann.

Die Erfindung geht einen anderen Weg: Die Erfindung betrifft die Verwendung einer Montageklammer, die am Solarkollektor befestigt wird, wobei diese Montageklammer gleichzeitig die Funktion eines "Fanghakens" übernimmt, wenn der Solarkollektor am Dach auf korrespondierende Schienen gesetzt und dort befestigt wird.

Die Montageklammer kann am Solarkollektor befestigt werden, bevor dieser an die Montageposition (zum Beispiel auf ein Dach) transportiert wird. Dies erleichtert die Vormontage und vermeidet es, dass an der Fassade oder auf dem Dach weitere Montage-/Justierarbeiten vorgenommen werden müssen.

Die eigentliche Montage auf den Montageschienen reduziert sich erfindungsgemäß darauf, die Solarkollektoren mit den Montageklammern auf eine Schiene aufzusetzen oder in eine Schiene einzuhängen.

Aus dieser Beschreibung ergibt sich bereits, dass je Solarkollektors prinzipiell zwei Montageklammern genügen, um die gewünschte Montagehilfe zu erreichen. Die Montageklammern werden dazu vorzugsweise im Abstand zueinander auf der Rückseite des Solarkollektors oder an gegenüberliegenden seitlichen Randbereichen des Solarkollektors montiert. Es ist aber ohne weiteres möglich, nur eine oder mehr als zwei Montageklammern pro Solarkollektor vorzusehen.

In ihrer allgemeinsten Ausführungsform betrifft die Erfindung eine Verwendung einer Montageklammer gemäß Anspruch 1.

Mit anderen Worten: die Montageklammer hat mindestens zwei Funktionsbereiche.

Der eine Funktionsbereich dient der Befestigung der Montageklammer am Solarkollektor. Dazu dienen die genannten Haken an der Montageklammer, die in korrespondierende Öffnungen am Gehäuse des Solarkollektors eingesteckt werden. Die Öffnungen und die Haken sind so aufeinander abgestimmt, dass eine kraftschlüssige Verbindung oder Verrastung zwischen Montageklammer und Solarkollektor erfolgt. Diese kraftschlüssige Verbindung kann eine formschlüssige Verbindung sein.

Dem Ingenieur stehen dazu mehrere Verbindungstechniken zur Verfügung, die bisher jedoch nur in anderen technischen Bereichen angewendet wurden. Die Verbindung kann beispielsweise eine reine Steckverbindung sein, bei der die genannten Haken verformbare Abschnitte aufweisen, die ein Lösen der Montageklammer verhindern, wenn die Haken in die Öffnungen eingeführt worden sind. Andere Verbindungstechniken sind Bajonettverschlüsse oder Haken mit besonderen geometrischen Formen.

Eine solche Ausführungsform wird nachstehend anhand der Figurenbeschreibung näher erläutert.

Bei dieser Ausführungsform weist die Montageklammer auf ihrer, der Rückseite des Solarkollektors zugewandten Seite drei, in Richtung auf den Solarkollektor frei vorstehende und im Abstand zueinander verlaufende Haken auf.

Mindestens ein Haken kann dabei - in einer Seitenansicht - eine T-Form aufweisen; mindestens ein weiterer Haken kann - wiederum in der Seitenansicht - eine umgekehrte L-Form aufweisen. Ein dritter Haken ist in der Seitenansicht beispielsweise als stegartiger Vorsprung gestaltet.

Erfindungsgemäß umfasst der Begriff "Haken" beliebige Querschnittsformen und Geometrien, also beispielsweise auch zylindrische Zapfen, Winkel, kugelförmige Profile oder dergleichen.

Bei dieser Bauform mit drei Haken können die Öffnungen für zwei der drei Haken so ausgebildet sein, dass sich die Haken, wenn sie durch die Öffnungen hindurchgeführt sind, anschließend senkrecht zur Steckrichtung verschieben lassen, bis zu einem Anschlag, der der Position entspricht, in der der dritte Haken in eine korrespondierende Öffnung formschlüssig eingesetzt werden kann. Bei dieser Technik, die sich auch analog mit mehr als drei Haken realisieren lässt, ist eine exakte Position der Montageklammer am Solarkollektor möglich. "Senkrecht zur Steckrichtung" bedeutet im einfachsten Fall: parallel zur Vorder- und Rückseite des Solarkollektors.

Die Öffnungen für die Aufnahme der Haken können sowohl im Randbereich eines Solarkollektors, beispielsweise eines Rahmen- oder Wannenkollektors eingesetzt werden, als auch irgendwo entlang der Rückseite des Solarkollektors..

Durch die Ausbildung mehrerer Öffnungen auf der Rückseite beziehungsweise im Randbereich des Solarkollektors können die genannten Montageklammern in unterschiedlichen Positionen montiert werden.

Die Erfindung umfasst Ausführungsformen der Montageklammer mit mindestens einem Haken, der in der Montageposition des Solarkollektors an der Schiene auf einer ersten Seite der Schiene verläuft und mindestens einem weiteren Haken, der in der Montageposition des Solarkollektors an der Schiene auf einer zweiten Seite der Schiene verläuft.

Ebenso umfasst die Erfindung eine Montageklammer mit mindestens zwei Haken, die in der Montageposition des Solarkollektors an der Schiene auf einer ersten Seite der Schiene verlaufen und mindestens einem weiteren Haken, der in der Montageposition des Solarkollektors an der Schiene auf einer zweiten Seite der Schiene verläuft.

Dabei können sich die Haken, in jeder der vorgenannten Ausführungsformen, von einer planaren Grundfläche oder von einer geraden Kante erstrecken. Diese planare Grundfläche hat den Vorteil, dass sie komplett gegen eine ebenfalls planare Randfläche oder Rückseite des Solarkollektors anliegt.

Der erwähnte Anschlag der Montageklammer dient dazu, die Baueinheit aus Solarkollektor und Montageklammer zumindest temporär an der zuvor montierten Schiene festzuhalten und auszurichten (zu justieren).

Dieser Anschlag verläuft in Steckrichtung der Haken, das heißt im Wesentlichen senkrecht zur Rückseite des Solarkollektors.

Dabei kann der Anschlag von einem separaten Haken ausgebildet werden, der von einem Grundkörper der Montageklammer in eine Richtung absteht, die umgekehrt zu der Richtung ist, in der die Haken vom Grundkörper verlaufen. Auch diese Ausführungsform ist im Ausführungsbeispiel dargestellt und weiter erläutert.

Nach einer Ausführungsform wird der Anschlag von einer Stirnfläche eines in der Seitenansicht dreieckförmigen Grundkörpers gebildet. Eine mögliche Geometrie dazu enthält die nachfolgenden Figurenbeschreibung.

Der Anschlag umfasst auch mindestens ein zusätzliches Rastmittel, das in der Montageposition des Solarkollektors an der Schiene in eine korrespondierende Ausnehmung der Schiene eingreift. Diese ist besonders vorteilhaft für Anwendungen, bei denen Solarkollektoren an vertikalen Gebäudefassaden montiert werden sollen, da die Rastmittel eine zusätzliche Sicherungsmaßnahme darstellen, um zu verhindern, dass der Solarkollektor während der Montage nach vorne kippt und herunterfällt.

Die Montageklammer kann aus Kunststoff oder Metall bestehen. Sie kann ein aus Blech gestanztes Teil oder ein im Strangguss hergestelltes Teil sein.

Die Montageklammer kann aus Vollmaterial bestehen; ebenso ist es möglich, im Grundkörper Öffnungen (Ausnehmungen) vorzusehen.

Wie oben erläutert ist es häufig notwendig, die auf den Schienen ausgerichteten Solarkollektoren anschließend relativ zueinander zu verschieben, um sie beispielsweise über korrespondierende Kupplungselemente miteinander funktional, zum Beispiel strömungstechnisch zu verbinden. Um diese Verschiebbarkeit entlang der Schienen zu erleichtern sieht eine Ausführungsform der Erfindung vor, dass die Montageklammer zumindest entlang der Abschnitte, die in der Montageposition des Solarkollektors an der Schiene Kontakt zur Schiene haben, eine Oberflächenbeschichtung aufweisen, wobei diese Oberflächenbeschichtung eine geringere Haftreibung aufweist als das Basismaterial der Montageklammer. Beispielsweise kann die Oberflächenbeschichtung eine Kunststoffbeschichtung, beispielsweise eine Teflonbeschichtung sein, die eine geringe Haftreibung gegenüber dem Schienenmaterial, beispielsweise Stahl, aufweist.

Die Erfindung wird nachstehend anhand eines Ausführungsbeispieles näher erläutert. Dabei zeigen - jeweils in schematisierter Darstellung -
Figur 1: eine Seitenansicht einer Montageklammer, die erfindungsgemäß verwendet wird
Figur 2: eine perspektivische Ansicht der Montageklammer nach Figur 1
Figur 3: eine Teilansicht auf eine Seite und den Boden eines Solarthermie-Kollektors
Figur 4: den Ausschnitt gemäß Figur 3 nach Einsetzen der Montageklammer
Figur 5: die Einheit aus Solarkollektor, Montageklammer und Schiene im Montagezustand.

In den Figuren sind gleiche oder gleich wirkende Bauteile mit gleichen Bezugsziffern dargestellt.

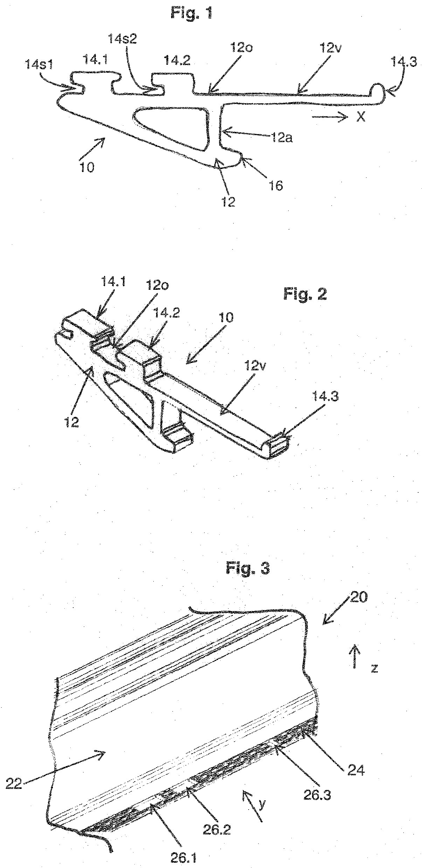

Die Montageklammer 10 besteht aus einem in der Seitenansicht etwa dreieckförmigen Grundkörper 12 mit einer planaren oberen Stirnfläche 120, die gemäß Figur 1 nach rechts verlängert ist (Abschnitt 12v), wobei am (rechten) freien Ende ein nach oben vorstehender Haken 14.3 verläuft. Von der oberen Stirnfläche 120 erstrecken sich außerdem ein erster Haken 14.1 und im Abstand dazu ein zweiter Haken 14.2.

Der Haken 14.1 weist in der Seitenansicht (Figur 1) eine T-Form auf, der Haken 14.2 eine umgekehrte L-Form, wobei der freie Schenkel auf den Haken 14.1 gerichtet ist.

Die in Figur 1 rechte vertikale Stirnfläche 12a des Grundkörpers 12 wird nachstehend Anschlag genannt. Am unteren Ende des Anschlags 12a ist eine Rastnase 16 zu erkennen, die in Richtung des Oberflächenabschnittes 12v über die Fläche 12a vorsteht.

Figur 3 zeigt einen Teil eines zugehörigen Solarkollektors 20, wobei in Figur 3 eine Seitenwand 22 und ein Rand 24 in Verlängerung einer (nicht dargestellten) Rückseite des Solarkollektors 20 zu erkennen sind.

Im Rand 24 sind drei Öffnungen 26.1, 26.2, 26.3 zu erkennen. Dabei dient die Öffnung 26.1 der Aufnahme des Hakens 14.1, die Öffnung 26.2 der Aufnahme des Hakens 14.2 und die Öffnung 26.3 der Aufnahme des Hakens 14.3.

Die Anordnung und Dimensionierung der Haken 14.1, 14.2, 14.3 sowie der Öffnungen 26.1, 26.2 und 26.3 ist derart, dass bei der Montage zunächst nur die Haken 14.1, 14.2 durch die Öffnungen.26.1, 26.2 in Steckrichtung Z hindurchgeführt werden. In diesem Moment liegt der Haken 14.3 gegen eine Unterseite des Randes 24 an, und zwar rechts von der dargestellten Öffnung 26.3.

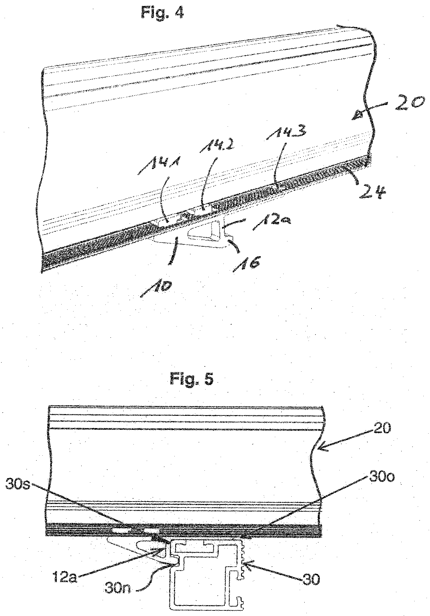

Anschließend wird die Montageklammer 10 nach links verschoben (Figuren 3, 4), bis der Haken 14.3 unterhalb der Öffnung 26.3 liegt und in die Öffnung 26.3 eingesteckt werden kann (Figur 4). Dies entspricht einer Position, bei der die mittleren Stege 14s1, 14s2 der Haken 14.1, 14.2 gegen die in Figur 3 linken Ränder der Öffnungen 26.1, 26.2 anliegen und die freien T-Schenkel bzw. der freie L-Schenkel auf dem Rand 24 aufliegen.

Damit ist eine sichere Fixierung der Montageklammer 10 am Solarkollektor 20 erreicht.

Die Baueinheit aus Solarkollektor 20 und Montageklammer 10 wird anschließend an die Stelle gebracht, an der zuvor die Montageschienen 30 montiert worden sind. Der Solarkollektor mit zwei der genannten Montageklammern (an gegenüberliegenden seitlichen Rändern) wird anschließend einfach auf eine Schiene 30 gehängt, wie in Figur 5 schematisch dargestellt.

Dabei ist die Schiene 30 so gestaltet, dass ihre Oberseite 30o gegen den Abschnitt 12v der Montageklammer 10 anliegt, der Anschlag 12a gegen eine Seitenfläche 30s der Schiene 30 anliegt und die Rastnase 16 in eine korrespondierende Nut 30n der Schiene eingreift (Figur 5).

Damit ist der Solarkollektor 20 sowohl in Steckrichtung Z als auch in Richtung X (senkrecht dazu) gegenüber der Schiene 30 gesichert (diese beiden Richtungen des Koordinatensystems sind definiert), während sich in Richtung Y, das ist senkrecht zur Zeichenebene gemäß Figur 5, eine Verschiebbarkeit des Solarkollektors 20 relativ zur Schiene 30 in der gewünschten Weise ergibt.

Die Montageklammer 10 ist auf der Unterseits 12u des Abschnitts 12v und im Bereich des Anschlags 12a und der Nase 16 mit Teflon beschichtet.

Die Erfindung ist auf folgenden Anwendungsfall gerichtet:
Verwendung einer Montageklammer der genannten Art zur verschiebbaren Befestigung eines Solarkollektors an einer korrespondierenden Schiene.

Dabei dient die Montageklammer vor allem der Sicherung des Solarkollektors an einer, auf einer Rückseite des Solarkollektors verlaufenden Montageschiene

## Patentansprüche

1. Verwendung einer Montageklammer (10) zur verschiebbaren Befestigung eines Solarkollektors (20) an einer korrespondierenden Montageschiene (30), mit folgenden Merkmalen der Montageklammer (10) in ihrer Montageposition:.
a) die Montageklammer (10) weist auf ihrer, der Rückseite des Solarkollektors (20) zugewandten Seite (12o) mindestens drei, in Richtung auf den Solarkollektor (20) frei vorstehende und im Abstand zueinander verlaufende Haken (14.1, 14.2, 14.3) auf, die in einer Steckrichtung (Z) in korrespondierende Öffnungen (26.1, 26.2, 26.3) am Gehäuse des Solarkollektors (20) einsteckbar und fixierbar sind,
b) die Montageklammer (10) weist auf ihrer, der Rückseite des Solarkollektors (20) abgewandten Seite mindestens einen Anschlag (12a) auf, der
b1) in Steckrichtung (Z) verläuft,
b2) an der Schiene (30) gegen die Schiene (30) anliegt.
b3) mindestens ein Rastmittel (16) aufweist, das in der Montageposition des Solarkollektors (20) an der Schiene (30) in eine korrespondierende Ausnehmung (30n) der Schiene (30) eingreift.

2. Verwendung der Montageklammer (10) nach Anspruch 1, bei der mindestens ein Haken (14.1), in einer Seitenansicht, eine T- Form aufweist.

3. Verwendung der Montageklammer (10) nach Anspruch 1, bei der mindestens ein Haken (14.2), in einer Seitenansicht, eine umgekehrte L- Form aufweist.

4. Verwendung der Montageklammer (10) nach Anspruch 1, bei der mindestens ein Haken (14.3), in einer Seitenansicht, als stegartiger Vorsprung gestaltet ist.

5. Verwendung der Montageklammer (10) nach Anspruch 1, mit mindestens einem Haken (14.1, 14.2), der in der Montageposition des Solarkollektors (20) an der Schiene (30) auf einer ersten Seite der Schiene (30) verläuft und mindestens einem weiteren Haken (14.3), der in der Montageposition des Solarkollektors (20) an der Schiene (30) auf einer zweiten Seite der Schiene (30) verläuft.

6. Verwendung der Montageklammer (10) nach Anspruch 1, mit mindestens zwei Haken (14.1, 14.2), die in der Montageposition des Solarkollektors (20) an der Schiene (30) auf einer ersten Seite der Schiene (30) verlaufen und mindestens einem weiteren Haken (14.3), der in der Montageposition des Solarkollektors (20) an der Schiene (30) auf einer zweiten Seite der Schiene (30) verläuft.

7. Verwendung der Montageklammer (10) nach Anspruch 1, deren Haken (14.1, 14.2, 14.3) sich von einer planaren Grundfläche (12o) erstrecken.

8. Verwendung der Montageklammer (10) nach Anspruch 1, deren Anschlag (12a) von einer Stirnfläche eines in einer Seitenansicht dreieckförmigen Grundkörpers (12) gebildet wird.

9. Verwendung der Montageklammer (10) nach Anspruch 1, die aus einem Blech gestanzt ist.

10. Verwendung der Montageklammer (10) nach Anspruch 1, die zumindest entlang ihrer Abschnitte, die in der Montageposition des Solarkollektors (20) an der Schiene (30) Kontakt zur Schiene (30) haben, eine Oberflächenbeschichtung aufweist.

11. Verwendung der Montageklammer (10) nach Anspruch 10, deren Oberflächenbeschichtung eine geringere Haftreibung aufweist als das Basismaterial der Montageklammer (10).

## Claims

1. Use of a mounting bracket (10) for a slidable fixation of a solar collector (20) at a corresponding mounting rail (30), wherein the mounting bracket (10) comprises the following features in its mounted position:
a) at its side (12o) opposite to the backside of the solar collector (20) the mounting bracket (10) features as least three hooks (14.1, 14.2, 14.3), arranged at a distance to each other and freely protruding towards the solar collector (20), which hooks can be inserted along a sticking direction (Z) and fixed in corresponding openings (26.1, 26.2, 26.3) at the housing of the solar collector (20).
b) the mounting bracket (10) features at least one stopper (12a) on its far side with respect to the back side of the solar collector (20), which stopper (12a)
b1) extends in the sticking direction (Z),
b2) lies at the rail (30) and against the rail (30),
b3) comprises at least one snap means (16), latching in a corresponding recess (30n) of said rail (30) in a mounting position of the solar collector (20) at said rail (30),

2. Use of a mounting bracket (10) according to claim 1 with the proviso that at least one hook (14.1) features a T-shape, in a side view.

3. Use of a mounting bracket (10) according to claim 1 with the proviso that at least one hook (14.3) features an inverse L-shape, in a side view.

4. Use of a mounting bracket (10) according to claim 1 with the proviso that at least one hook (14.3) is designed as a ridge-like protrusion,

5. Use of a mounting bracket (10) according to claim 1 with at least one hook (14.1, 14.2), which extends on a first side of the rail (30) in a mounting position of the solar collector (20) at the rail (30) and at least one further hook (14.3), which extends on a second side of the rail (30) in the mounting position of the solar collector (20) at the rail (30).

6. Use of the mounting bracket (10) according to claim 1 with at least two hooks (14.1, 14.2), extending on one side of the rail (30) in a mounting position of the solar collector (20) at the rail (30) and at least one further hook (1.4,3), extending on a second side of the rail (30) in the mounting position of the solar collector (20) at the rail (30).

7. Use of the mounting bracket (10) according to claim 1 with the proviso that the hooks (14.1, 14.2, 14.3) extend from a planar base (12o).

8. Use of the mounting bracket (10) according to claim 1 with the proviso that the stopper (12a) is provided by a front surface of a base body (12) with a triangular profile in a side view.

9. Use of a mounting bracket (10) according to claim 1 being punched out of a metal sheet.

10. Use of a mounting bracket (10) according to claim 1 featuring a surface coating at least along its sections which, in a mounting position of the solar collector (20) at the rail (30), are in contact with said rail (30).

11. Use of a mounting bracket (10) according to claim 10, the surface coating of which features a lesser sticktion than the basic material of the mounting bracket 10.

## Revendications

1. Utilisation d'une pince de montage (10) pour la fixation coulissante d'un collecteur solaire (20) sur un rail de montage (30) correspondant, avec les caractéristiques suivantes de la pince de montage (10) dans sa position de montage :
a) la pince de montage (10) présente, sur son côté (12o) tourné vers la face arrière du collecteur solaire (20), au moins trois crochets (14.1, 14.2, 14.3) dépassant librement en direction vers le collecteur solaire (20) et s'étendant à distance les uns des autres, desquels peuvent être insérés dans une direction d'insertion (Z) dans des ouvertures (26.1, 26.2, 26.3) correspondantes sur le boîtier du collecteur solaire (20) et y être fixés,
b) la pince de montage (10) présente, sur son côté tournant le dos à la face arrière du collecteur solaire (20), au moins une butée (12a), laquelle
b1) s'étend en direction d'insertion (z),
b2) repose contre le rail (30) au niveau du rail (30),
b3) présente au moins un moyen d'arrêt (16) lequel, dans la position de montage du collecteur solaire (20) sur le rail (30), est en prise dans un évidement (30n) correspondant du rail (30).

2. Utilisation de la pince de montage (10) selon la revendication 1,
dans laquelle au moins un crochet (14.1) présente,
dans une vue de côté, une forme en T.

3. Utilisation de la pince de montage (10) selon la revendication 1,
dans laquelle au moins un crochet (14.2) présente, dans une vue de côté, une forme de L inversé.

4. Utilisation de la pince de montage (10) selon la revendication 1,
dans laquelle au moins un crochet (14.3) est réalisé, dans une vue de côté, en tant que saillie semblable à une nervure.

5. Utilisation d'une pince de montage (10) selon la revendication 1 avec au moins un crochet (14.1, 14.2) lequel, dans la position de montage du collecteur solaire (20) sur le rail (30), s'étend sur un premier côté du rail (30), et au moins un deuxième crochet (14.3) lequel, dans la position de montage du collecteur solaire (20) sur le rail (30), s'étend sur un deuxième côté du rail (30).

6. Utilisation de la pince de montage (10) selon la revendication 1, avec au moins deux crochets (14.1, 14.2) lesquels, dans la position de montage du collecteur solaire (20) sur le rail (30), s'étendent sur un premier côté du rail (30), et au moins un autre crochet (14.3) lequel, dans la position de montage du collecteur solaire (20) sur le rail (30), s'étend sur un deuxième côté du rail (30).

7. Utilisation de la pince de montage (10) selon la revendication 1 dont les crochets (14.1, 14.2, 14.3) s'étendent depuis une surface de base plane (12o).

8. Utilisation de la pince de montage (10) selon la revendication 1 dont la butée (12a) est formée par une surface frontale d'un corps de base (12) de forme triangulaire dans une vue de côté.

9. Utilisation de la pince de montage (10) selon la revendication 1, laquelle est découpée d'une tôle.

10. Utilisation de la pince de montage (10) selon la revendication 1 laquelle, au moins le long de ses parties ayant un contact avec le rail (30) dans la position de montage du collecteur solaire (20) sur le rail (30), présente un revêtement de surface.

11. Utilisation de la pince de montage (10) selon la revendication 10 dont le revêtement de surface présente un frottement par adhérence moindre que le matériau de base de la pince de montage (10).
